# EUROPÄISCHE PATENTSCHRIFT

(11) **EP 1 001 015 B1**
(45) Veröffentlichungstag und Bekanntmachung des Hinweises auf die Patenterteilung: **26.03.2003**
(21) Anmeldenummer: 99122148.2
(22) Anmeldetag: 05.11.1999
(51) Int. Cl.: C12C 7/04

(54) **Nassschrotmühle**
Wet grist mill
Broyeur humide de graines

(30) Priorität: 06.11.1998 DE 29819864 U
(43) Veröffentlichungstag der Anmeldung: 17.05.2000
(73) Patentinhaber: Anton Steinecker Maschinenfabrik GmbH, 85356 Freising-Attaching (DE)
(72) Erfinder: Kammerloher, Helmut, 85354 Freising (DE); Flossmann, Rudolf, 85416 Langenbach (DE); Gratzer, Harald, 85459 Berglern (DE)
(74) Vertreter: Grünecker, Kinkeldey, Stockmair & Schwanhäusser Anwaltssozietät

(56) Entgegenhaltungen:
- DE-A- 1 805 708
- DE-A- 2 533 555
- DE-C- 4 213 204
- GB-A- 2 003 399

## Beschreibung

Die Erfindung betrifft eine Nassschrotmühle der im Oberbegriff des Anspruchs 1 angegebenen Art.

Bei der Maischezubereitung zur Bierherstellung wird geweichtes Malz in der Nassschrotmühle mittels des Quetschwalzwerks aus einem oder mehreren Mahl-Walzenpaaren vermahlen, dann mit Maischewasser versetzt und der Maischepumpe zugeführt, die die Maische zur Weiterverarbeitung in das Maischgefäß pumpt. Durch definiertes Weichen wird nur die äußere Hülle des Gersten-Malzkoms geweicht, der stärkehaltige Mehlkörper bleibt trocken, so dass er beim Mahlen gut aufgeschlossen werden kann. Durch den technologisch wünschenswert trockenen Mehlkörper ergibt sich jedoch für der Mahlung folgende Prozessschritte eine gewisse Problematik, denn die nach dem Mahlen vorliegenden feinen Mehlanteile führen in Verbindung schon mit geringen Mengen warmem Maischewassers zu stark klebrigen, adhäsiven Gemischeigenschaften und zu Verklumpungen.

Bei in der Praxis verwendeten Nassschrotmühlen sind Wasserverteilsysteme vorgesehen, mit denen eine homogene pumpfähige Maische nur dann mit einer Kreiselpumpe pumpbar ist, wenn ein zusätzliches Homogenisierorgan in Form eines schnelllaufenden Rührers vorgesehen ist. Dieser Rührer stellt den erforderlichen Zuflußss zur Kreiselpumpe durch mechanisches Auflösen von Verklumpungen sicher. Der Rührer kann an das Pumpenlaufrad gekuppelt oder bei langsamerer Laufgeschwindigkeit mit einem eigenen Antrieb ausgeführt werden. Durch das schnelllaufende Rührorgan wird wegen Oxidationsvorgängen unerwünschter Luftsauerstoff in die Maische gebracht, und müssen hohe Scherraten in Kauf genommen werden, die nicht erwünschte makromolekulare Veränderungen hervorrufen, z.B. die Bildung von Beta-Glucan-Gel, das die spätere Abläuterung und Filtration negativ beeinträchtigt.

Alternativ ist es in der Praxis bekannt, als Maischepumpe eine verschleißanfällige Exzenter-Schneckenpumpe zu verwenden, die wegen der Zutaufproblematik einer zusätzlichen Zuförderung bedarf, in der Regel einer an die Pumpenwelle gekoppelten Förderschnecke.

Bei Verwendung der mit einer Zuförderschnecke gekoppelten Exzenterschneckenpumpe werden aufgrund der wesentlich größeren Einzugsfläche des Pumpenzulaufs deutlich niedrigere Anforderungen an den das Einfliessen der Maische gestellt. D.h. bei Inhomogenitäten ist die Verstopfungsgefahr wesentlich geringer. Dafür treten aufgrund des hohen bauartbedingten Verschleißes von Pumpenteilen (Stator und Rotor) für den Anwender hohe Wartungs- und Betriebskosten auf. Die Feststoffe, insbesondere die Spelzen in der Maische, haben eine stark abrasive Wirkung. Zudem wird bei beiden Pumpenarten anhaftende Luft durch die Pumpe gefördert und in kleine, oxidativ reaktive Bläschengrößen zerteilt.

Bei der aus DE 25 33 555 A bekannten Nassschrotmühle ist eine Befeuchtungsvorrichtung vorgesehen, die aus zwei unterhalb der Walzen des Quetschwalzwerks und zu diesen parallel den Zulauftrichter horizontal durchsetzenden, beabstandeten Düsenrohren besteht. Beide Düsenrohre sind an der Zulauftrichterwand festgelegt und jeweils an einen Wassereinlauf angeschlossen. Jedes Düsenrohr hat an der zur darüberliegenden Quetschwalze weisenden Oberseite eine Reihe von Durchgangsbohrungen, die Düsen bilden. Ferner sind, an beiden Außenseiten jedes Düsenrohres als Düsen Reihen horizontal orientierter Bohrungen vorgesehen. Aus den oberen Bohrungen wird Wasser nach oben gegen die Quetschwalzen gesprüht. Aus den unteren, horizontalen Bohrungen wird Wasser einerseits nach außen gegen die Zulauftrichterwand, und andrerseits horizontal nach innen zum anderen Düsenrohr gesprüht

Bei der aus DE 18 05 708 A bekannten Nassschrotmühle ist eine Befeuchtungsvorrichtung vorgesehen, die einen am Ende der verlängerten Welle der Maischepumpe angebrachten Verteilerteller aufweist. Auf den Verteilerteller wird Brauwasser von oben mittels eines Brauwasserzuführungsrohres geleitet. Der Verteilerteller verspritzt das Brauwasser nach allen Seiten. Der Zulauftrichter zur Maischepumpe ist als Staubehälter ausgebildet, in dem ein Rührwerk zur intensiven Durchmischung des Gemisches enthalten ist.

Der Erfindung liegt die Aufgabe zugrunde, eine baulich einfache, wartungsarme Nassschrotmühle zu schaffen, mit der sich homogene Maischen erzeugen lassen.

Die gestellte Aufgabe wird mit der Nassschrotmühle mit den Merkmalen des Anspruchs 1 gelöst.

Die Wasserverteil-Vorrichtung führt das Maischewasser so, dass ein oberer Teilstrom annähernd parallel unterhalb des Quetschwalzwerks verläuft und sich gleichmäßig mit dem Schrotgut vermischt und bewirkt, dass das entstehende Gemisch durch den Impuls des gerichteten oberen Teilstroms ins Zentrum des Zulauftrichters gelangt. Dies ist besonders wichtig für die Zuführung der Maische während des Anlaufens der Schrotmühle. Die Wasserverteilvorrichtung besteht aus zwei Düsen, die mit Leitplatten die beiden Teilströme erzeugen, leiten und führen. Die eine Leitplatte führt den oberen Teilstrom, der in etwa die Hälfte des zulaufenden Maischewassers enthält, auseinander und zur Mitte des Zulauftrichters, während die andere Leitplatte die andere Hälfte des gesamten zulaufenden Maischewassers nach unten und zur Seite in den an der Wand des Zulauftrichters entlang strömenden Wasserfilm führt. Der untere Teilstrom, der nach unten und zur Seite geführt wird, erzeugt speziell beim Anlaufen der Maschine einen gleichmäßig bewegten Wasserfilm entlang der Zulauftrichterwand, der Anhaftungen und Anklebungen der feinen stärkehaltigen Anteile verhindert und somit, gegebenenfalls ohne zusätzliche Rührorgane, ein sicheres Anlaufen der leeren Nassschrotmühle gewährleistet. Ohne einen solchen Wasserfilm entstünden bei Schrotbeginn Klumpen, die dann zum Verstopfen der Pumpe führen könnten, wenn sie sich von der Oberfläche der Wand des Zulauftrichters ablösen. Weiterhin unterspült im stationären Betriebszustand speziell der untere Teilstrom auf der Zulauftrichterwand die entstehende Maische, so dass störende Segmentationen von Schrotpartikeln vermieden werden. Durch den Einfluss der von der Wasserverteilvorrichtung gebildeten oberen und unteren Teilströme ergibt sich ein hohes Gleichmaß der Zuführung und Vermischung im Einlauf zur Maischepumpe, und somit eine sehr homogene, gut fließfähige Maische. Weiterhin ist günstig, dass bei Nutzung des Niveaus im Zulauftrichter an der Oberfläche eine sehr niedrige Fließgeschwindigkeit vorliegt und eine Art Beruhigungszone entsteht, in der unerwünscht am Schrotgut anhaftende Luft bereits weitgehend unbehindert entweichen kann. Derart behandelte Maischen sind beim Einlauf in die Maischepumpe nahezu luftfrei. Dies ist zur Unterbindung unerwünschter Oxidationen wichtig, da jede Pumpe mitgeförderte Luftblasen in kleine reaktive Bläschen dispergiert Durch den positiven Einfluss der Wasserverteilvorrichtung auf die Konsistenz der Maische kann eine baulich einfache, wartungsarme und für die Maische schonende Kreiselpumpe als Maischepumpe eingesetzt werden, obwohl andere Pumpen ebenfalls brauchbar sind.

Für die Gleichmäßigkeit der Vermischung bereits vor der Maischepumpe sind die Merkmale gemäß Anspruch 2 zweckmäßig. Es lassen sich durch die Teilströme eine Konzentration im Zentrum des Zufauftrichters erzielen, und Anhaftungen an der Zulauftrichterwand vermeiden.

Gemäß Anspruch 3 nehmen die Düsen das Wasser direkt an der Mündung des Wassereinlaufs auf, oder sogar schon früher, um günstige Strömungseigenschaften zu erzielen.

Baulich einfach weist gemäß Anspruch 4 die Wasserverteilvorrichtung zwei miteinander verbundene Leitplatten auf.

Gemäß der Ansprüche 5 und 6 werden die Teitströme bereits im Wassereinlaufkanal voneinander separiert, wobei der obere Teilstrom bei seiner Neigung, sich unter der Schwerkraft auch seitlich auszubreiten, von der einen Leitplatte unterstützt, und von deren ansteigendem Endabschnitt schließlich sogar nach oben geleitet wird, um die Mischung in der Mitte des Zulauftrichters zu konzentrieren. Hierbei wird der Maischewasserstrom bereits in dem Einlaufkanal in zwei Teile aufgeteilt. Zweckmäßig erfolgt eine hälftige Teilung. Es ist jedoch denkbar, das Verhältnis zwischen den beiden Teilströmen an den Bedarf anzupassen und von 1:1 abzuweichen.

Baulich einfach wird gemäß Anspruch 7 die Wasserverteilvorrichtung mit ihrem Ringflansch im Zulauftrichter angebracht.

Gemäß Anspruch 8 ist die untere Leitplatte breiter als die lichte Weite der Mündung des Wassereinlaufs, so dass von dem einlaufenden Maischewasser im unteren Teilstrom alle Anteile nach unten und zur Seite umgelenkt werden, und nicht direkt geradeaus weiter in Richtung zum Zentrum des Zulauftrichters gelangen. Der einem Bogen folgende Unterrand der nach unten weisenden Leitplatte erzeugt eine gleichmäßige Wasserfilmfläche über in etwa 180°.

Um unnötige Verwirbelungen zu vermeiden, und für jeden Teilstrom günstige Strömungsverhältnisse von Anfang an zu erzielen, ist gemäß Anspruch 9 zumindest die der Strömung entgegengerichtete Kante der Leitplatte als Schneide ausgebildet. Um eine Zerstäubung des Wassers und somit eine erhöhte Sauerstoffaufnahme zu vermeiden, weisen beide Leitplatten scharfe Abrisskanten auf.

Gemäß Anspruch 10 ist die Wirkhöhe des aufgebogenen Endabschnittes der einen Platte gering, um unerwünschte Verwirbelungen oder Spritzer zu vermeiden, und sicherzustellen, dass der obere Teilstrom tatsächlich bis zum Zentrum des Zulauftrichters gelangt. Der aufgebogene Endabschnitt bewirkt eine filmartige Aufteilung des oberen Teilstroms, um sicherzustellen, dass das Schrotgut, z.B. in dem Bereich zwischen den beiden Abstreifleisten, gleichmäßig mit Wasser vermengt wird.

Gemäß Anspruch 11 wird mit gerundeten Übergängen eine saubere Strömungsführung sichergestellt, und werden auch Ecken oder Totzonen vermieden, in denen sich Ablagerungen festlegen könnten.

Gemäß Anspruch 12 können zusätzlich auf den Leitplatten hochstehende Strömungsleitstege angebracht sein, die in den Teilströmen weitere Unterteilungen vornehmen und Teile der Teilströme in vorbestimmte Richtungen führen.

Gemäß Anspruch 13 hält eine bewusst abgezweigte Spülströmung die von den Teilströmen nicht direkt bestrichenen Leitplattenoberflächen sauber.

Herstellungstechnisch einfach sind die Merkmale gemäß Anspruch 14.

Im Hinblick auf Wartungsbedarf, Verschleiß und vor allem eine schonende Förderung der Maische wird gemäß Anspruch 15 als Maischepumpe eine Kreiselpumpe verwendet, die wegen der durch die Wasserverteilvorrichtung erzielbaren, guten Homogenität der Maische sehr nahe an der Mündung des Zulauftrichters angeordnet werden kann, so dass die Maische nur kurz beschleunigt wird. Zweckmäßig ist im Zulauftrichter eine Niveauregulierung vorgesehen, die für eine schonende Maischeförderung, eine gleichmäßige Wirkung der Wasserverteilvorrichtung und damit für die hohe Qualität der Maische sorgt.

Gemäß Anspruch 16 hat der Zulauftrichter ein großes Fassungsvermögen. Er ist drucksteif und einfach herstellbar. Der jeweilige untere Teilstrom der Wasserverteilvorrichtung bestreicht einen großen Teil der Innenoberfläche des Zulauftrichters. Es können vier Wassereinläufe jeweils mit Wasserverteilvorrichtungen vorgesehen werden, so dass sämtliche Oberflächen der Innenwand des Zulauftrichters in etwa gleichförmig bestrichen und sauber gehalten werden.

Anhand der Zeichnung wird eine Ausführungsform des Erfindungsgegenstandes erläutert. Es zeigen:
- Fig. 1: einen schematischen Vertikalschnitt einer Naßschrotmühle,
- Fig. 2: einen Horizontalschnitt in der Schnittebene II-II in Fig. 1,
- Fig. 3: einen vergrößerten Vertikal-Teilschnitt in der Schnittebene III-III von Fig. 2, und
- Fig. 4: eine schematische Perspektivansicht einer eine Baueinheit bildenden Wasserverteilvorrichtung, wie sie in den vorhergehenden Figuren verwendet ist.

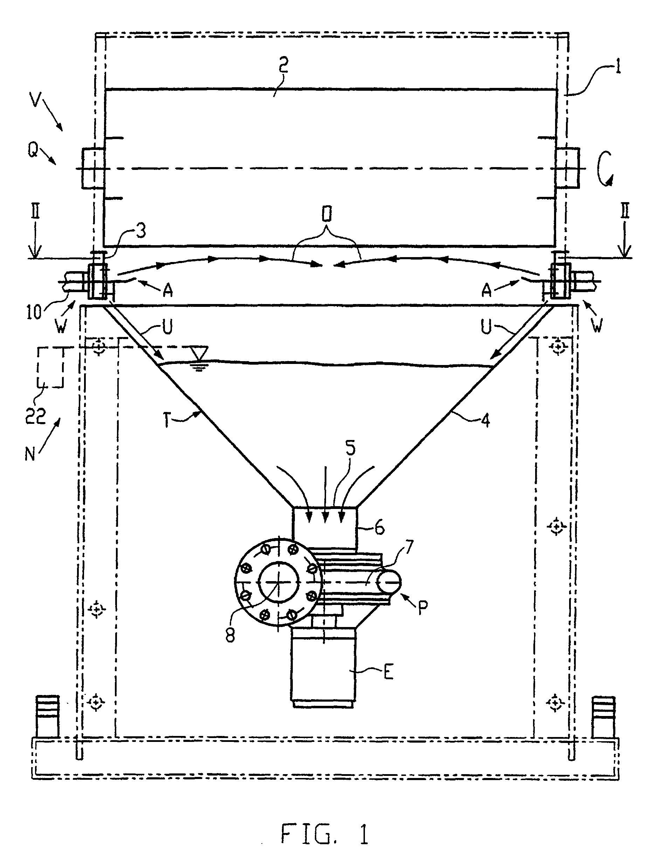

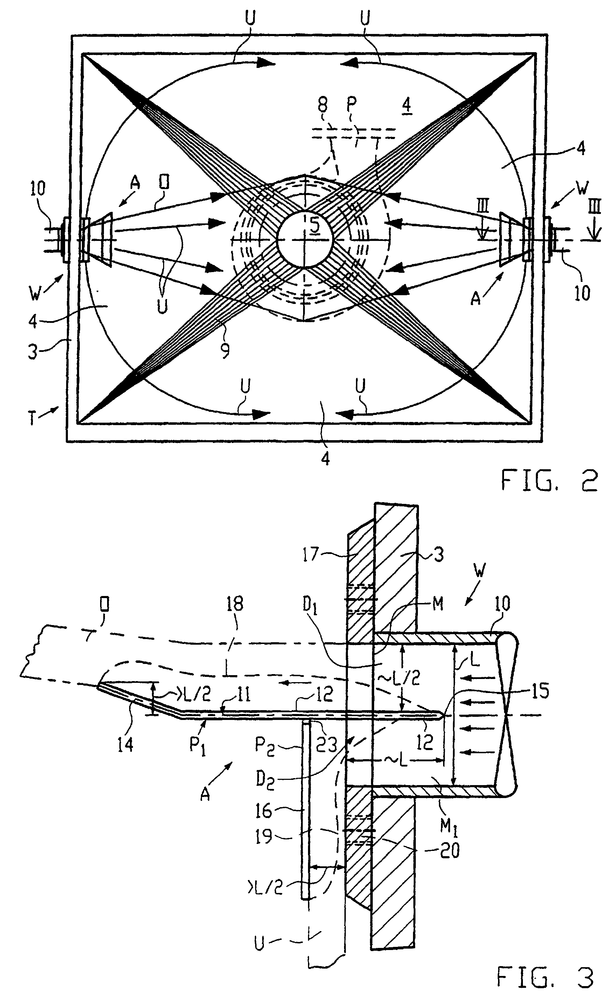

Eine in Fig. 1 schematisch gezeigte Vorrichtung V zum Erzeugen von Biermaische, eine sogenannte Nassschrotmühle N, enthält in einem Rahmenwerk 1 ein Quetschwalzwerk Q mit einem oder mehreren Mahl-Walzenpaaren 2, an das sich unten ein Kragen 3 eines Zulauftrichters T anschließt, dessen Wände mit 4 bezeichnet sind. Der Zulauftrichter T kann (Fig. 2) die Form eines umgekehrten vierseitigen Pyramidenstumpfes haben, dessen vier Wände 4 im wesentlichen eben ausgebildet sind, mit moderater Neigung zu einer unteren Mündung 5 verlaufen und zwischen sich gerundete Übergänge 9 haben, die gemeinsam eine kreisrunde Form der Mündung 5 definieren. Der Zulauftrichter T könnte auch mit der Form eines rotationssymmetrischen Kegelstumpfes ausgebildet sein (nicht gezeigt). An die untere Mündung 5 ist ein Gehäuse 6 einer Maischepumpe P angeflanscht, bei der gezeigten Ausführungsform eine Kreiselpumpe 7 mit einem Kanallaufrad oder einem offenen Laufrad, die in einen Abförderkanal 8 pumpt. Der Axialabstand des Gehäuses 6 zur unteren Mündung 5 des Zulauftrichters ist optimal kurz. Die Maischepumpe P wird angetrieben durch einen Antriebsmotor E. Anstelle einer Kreiselpumpe könnten andere Pumpentypen vorgesehen sein.

Unterhalb des Quetschwalzwerks Q sind zwei einander in etwa gegenüberliegende Wassereinläufe W für Maischwasser, zweckmäßigerweise auf gleicher Höhe, vorgesehen, deren jedem eine Wasserverteilvorrichtung A zugeordnet ist, die aus dem Maischewasser-Einlaufstrom einen oberen Teilstrom O und einen unteren Teilstrom U bildet. Die vorerwähnten Komponenten sind in for Naßschrotmühle N integriert, mit der aus geweichtem Malz unter Zusatz von Maischwasser über die Wassereinläufe W eine durch die Maischpumpe P pumpfähige, homogene Biermaische gebildet wird.

Im Zulauftrichter T kann eine Niveauregelung 22 vorgesehen sein (gestrichelt angedeutet). Die Naßschrotmühle N steht auf einem Unterbau, aus dem der Kanal 8 im wesentlichen horizontal herausführt.

Der obere Teilstrom O (s. Fig. 1 und 2) wird von der Wasserverteilvorrichtung A zum Zentrum des Zulauftrichters T und auseinander gespreizt und geringfügig nach oben gerichtet. Der untere Teilstrom wird von der Wasserverteilvorrichtung an den Oberflächen der Wände 4 des Zulauftrichters T geführt, d.h. von jedem Wassereinlauf W nach unten geleitet zu beiden Seiten auseinandergefächert, um einen die Oberflächen der Wände 4 im wesentlichen gleichförmig bestreichenden, möglichst gleichmäßigen Wasserfilm zu erzeugen, dessen Strömungsimpuls bis unter das Niveau im Zulauftrichter und zweckmäßigerweise bis zur Mündung 5 spürbar und wirksam ist.

Zu den Wassereinläufen W (es kann auch nur ein Wassereinlauf oder es können mehr als zwei Wassereinläufe vorgesehen sein) führt jeweils ein Einlaufkanal 10. Das Maischewasser wird zweckmäßigerweise erwärmt und mit einstellbarem Druck und/oder einstellbarer Zulaufrate eingeführt.

Gemäß Fig. 3 ist in dem Kragen 3 eine Mündung M des Wassereinlaufes W, z.B. als kreisrunde Öffnung, vorgesehen, bis zu der sich der Einlaufkanal 10 (Rohrleitung) erstreckt. Vor der Mündung M ist ein Kreisringflansch 17 mit einer in der Größe der Mündung M entsprechenden Öffnung festgelegt, z.B. mittels Befestigungsbohrungen 20, der Teil der eine Baueinheit bildenden Wasserverteilvorrichtung A ist. Bei der gezeigten Ausführungsform besteht die Wasserverteilvorrichtung A aus einer im wesentlichen horizontalen Leitplatte P1, z.B. einer Blechplatte 11, die im wesentlichen horizontal orientiert ist und mit einem Abschnitt 12 in den Einlaufkanal 10 greift. Am freien Ende der einen Leitplatte P1 ist ein nach oben gebogener Endabschnitt 14 angeformt. Ein weiterer Teil der Wasserverteilvorrichtung A ist eine andere, in etwa vertikal orientierte Leitplatte P2, die ebenfalls aus einer Blechplatte 16 bestehen kann und bei der gezeigten Ausführungsform an der Unterseite der Einleitplatte P1 angebracht ist, z.B. angeschweißt, angelötet, angeschraubt oder angeklebt. Die Leitplatten P1, P2 könnten auch aus Kunststoff bestehen, z.B. in Form eines einstückigen Spritzgußteils, der am Kreisringflansch 17 befestigt oder sogar mit diesen einstückig ausgebildet ist. Die Leitplatte P2 ist zweckmäßig mit einem annähernd halbkreisförmigen, eine scharfe Abrißkante bildenden Unterrand geformt, um einen gleichmäßigen Wasserfilm über 180° zu verteilen. Gestrichelt ist eine ebenfalls mögliche Rechteckform der Leitplatte P2 angedeutet.

Gestrichelt ist in Fig. 3 angedeutet, daß auf den zum Erzeugen der Teilströme wirksamen Oberflächen der Leitplatten P1, P2 hochstehende Strömungsleitstege 18, 19 vorgesehen sein könnten.

Die Wasserverteilungsvorrichtung A bildet im Bereich der Mündung M zwei Düsen D1, D2, deren gemeinsame Mündung M1 stromauf der Mündung M liegt oder mit dieser zusammenfällt (letzteres ist nicht gezeigt, und würde bedeuten, daß eine Endkante 15 der einen Leitplatte P1 weiter als in Fig. 3 nach links versetzt in der Ebene der Mündung M liegen würde).

Zumindest die der Strömung entgegengerichtete Kante 15 der einen Leitplatte P1 kann schneidenartig ausgebildet sein. Die Mündung M hat eine lichte Weite L, die von der einen Leitplatte P1 in der gezeigten Ausführungsform in etwa hälftig unterteilt wird in die beiden Düsen D1, D2. Das Teilungsverhältnis könnte auch abweichend von dem gezeigten 1:1-Teilungsverhältnis gewählt werden. Die eine Leitplatte P1 greift ca. mit einem Maß in den Einlaufkanal 10, das der lichten Weite L entspricht. Die Wirkhöhe des hochgebogenen Endabschnittes 14 ist zweckmäßigerweise kleiner als die halbe lichte Weite L. Durch den hochgebogenen Endabschnitt wird der obere Teilstrom abgeflacht und aufgeweitet. Weiterhin löst sich die Strömung in Verbindung mit einer scharfkantigen, z.B. rechtwinkligen Kante ohne Zerstäubung ab, so daß eine filmartige Wasseroberfläche entsteht. Der Abstand zwischen der anderen Leitplatte P2 und dem Kreisringflansch 17 bzw. der Wand des Zulauftrichters oder des Kragens 3 ist zweckmäßigerweise ebenfalls kleiner als die Hälfte der lichten Weite L. Die eine Leitplatte P1 erstreckt sich über annähernd die doppelte lichte Weite L ins Innere, während die andere Leitplatte P2 sich annähernd über die lichte Weite L nach unten erstreckt. Im Verbindungsbereich der Leitplatten P1, P2 ist eine spaltförmige Öffnung 23 vorgesehen, die gewollt Maischewasser durchläßt, um die Unterseite der Leitplatte P1 und auch die in den Zulauftrichter T weisende Rückseite der Leitplatte P2 freizuhalten bzw. zu reinigen.

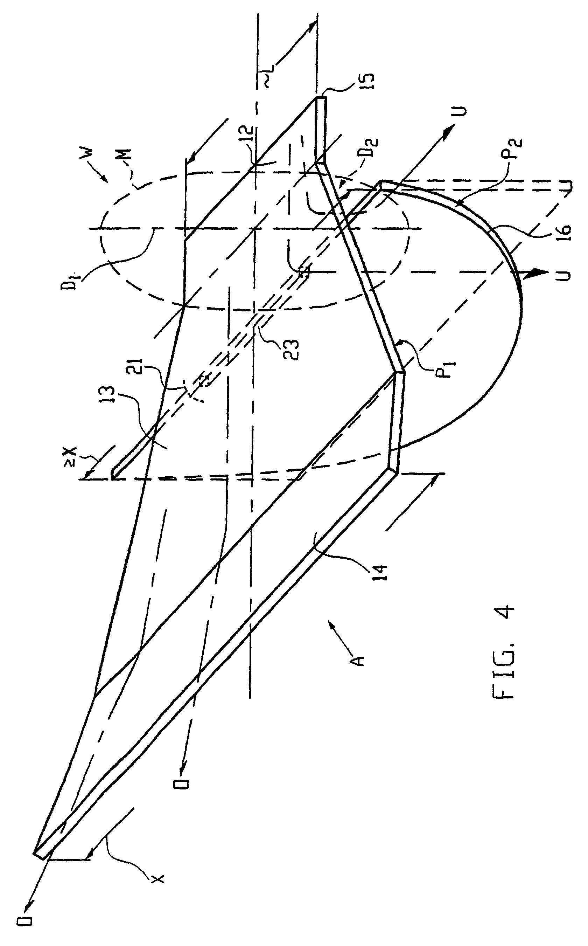

Fig. 4 ist eine Perspektivansicht der in den vorhergehenden Ausführungsformen verwendeten Wasserverteilvorrichtung A, die mit dem Kreisringflansch 17 (nicht gezeigt) eine Baueinheit bilden kann. Die eine Leitplatte P1 hat in ihrem einen Endabschnitt 12, der mit der angeschärften Kante 15 endet, eine Breite ensprechend der lichten Weite L, jedoch nur unter der Voraussetzung, daß der Bereich 12 bis in den Einlaufkanal 10 eingreift. Anschließend an den Bereich 12 verbreitert sich die eine Leitplatte P1 in einem Mittelbereich 13 allmählich bis zum aufgebogenen Endabschnitt 14, in dem sich die Verbreiterung fortsetzen kann. Bis zum Endabschnitt 14 ist die eine Leitplatte P1 im wesentlichen horizontal orientiert. Die Mündung M ist gestrichelt angedeutet, in die der Bereich 12 eingesteckt ist. Die andere Leitplatte P2, die von der Unterseite der einen Leitplatte P1 herabhängt, ist zweckmäßigerweise breiter als die lichte Weite L und kann in etwa so breit sein wie die Breite X des Endabschnitts 14. Sie hat zweckmäßigerweise eine halbkreisförmige Kontur. Dadurch ergibt sich eine gleichmäßige Wasser-Filmdicke über 180°. Bei 21 ist angedeutet, daß der Übergang 21 zwischen den beiden Leitplatten P1, P2 gerundet sein könnte. Es wäre auch möglich, den Übergang in den hochgebogenen Endabschnitt 14 zu runden. Die Seitenränder der Leitplatten P1, P2 wie auch ihre Endränder sind in Fig. 4 gerade dargestellt. Sie könnten gebogen verlaufen oder andere Formen haben, die der Strömungsführung, einer wirbelarmen Ablösung, und der gleichmäßigen Aufspreizung der Ströme, zugute kommen. Ferner wäre es denkbar, die Seitenränder beider Leitplatten P1, P2 hoch- bzw. umzubiegen, um die Strömungsführung zu verbessern. Auch könnten die Zwickel zwischen der Oberkante der anderen Leitplatte P2 und den Seitenrändern im Bereich 13 der einen Leitplatte P1 bis zum Kreisringflansch 17 hin abgedeckt sein (z.B. durch eine enstprechend breitere Ausbildung des Bereiches 13 bis zum schmaleren Bereich 12), um zu verhindern, daß dort Verwirbelungen auftreten und Anteile des unteren Teilstroms um die Taille der einen Leitplatte P1 herum nach oben ausweichen können. Zur Sicherstellung einer Selbstreinigung der Unterseite der Leitplatte P1 und der Vorderseite der Leitplatte P2, ist z.B. die Leitplatte P2 mit der schlitzartigen Öffnung 23 versehen. Der so abgeleitete kleine Strom hält die genannten Bereiche frei von Anbackungen und gewährleistet so eine rückstandsfreie Selbstreinigung.

Bei einer nicht dargestellten, alternativen Ausführungsform der Wasserverteilvorrichtung könnten zwei rundherum geschlossene, in Strömungsrichtung divergierende Schlitzdüsenkörper vorgesehen sein, deren obere analog zur einen Leitplatte P1 am Ausstoßende leicht nach oben gebogen ist, und deren untere analog zur Leitplatte P2 nach unten umgebogen und verbreitert ist.

## Patentansprüche

1. Nassschrotmühle, insbesondere zur Maischezubereitung, mit einem Quetschwalzwerk (Q) im oberen Bereich eines Zulauftrichters (T) zu einer untenliegenden Maischepumpe (P), mit wenigstens einem unterhalb des Quetschwalzwerks und im Abstand oberhalb der Maischepumpe angeordneten, in etwa horizontalen Maische-Wassereinlauf (W) in den Zulauftrichter, wobei dem Wassereinlauf zumindest überwiegend im Inneren des Zulauftrichters (T) eine Wasserverteilvorrichtung (A) mit Düsen (D1, D2) zugeordnet ist, mit denen wenigstens ein oberer Teilstrom (O) und wenigstens ein unterer Teilstrom (U) bildbar sind, **dadurch gekennzeichnet, dass** die an der Mündung (M) des Wassereinlaufs (W) an der Zulauftrichterwand (4) angeordnete Wasserverteilvorrichtung (A) aus einer oberen Düse (D1) zum Erzeugen des oberen Teilstroms (O), der im wesentlichen parallel zum Quetschwalzwerk (Q) orientiert ist, und einer unteren Düse (D2) zum Erzeugen des unteren Teilstroms (U) besteht, der im wesentlichen entlang der Zulauftrichterwand (4) nach unten und seitlich vom Wassereinlauf (W) weg orientiert ist, und dass die Wasserverteilvorrichtung (A) zwei Leitplatten (P1, P2) für die Teilströme (O,U) aufweist, von denen eine obere Leitplatte (P1) für den oberen Teilstrom (O) im wesentlichen eben ausgebildet und annähernd horizontal angeordnet ist, und von denen die andere untere Leitplatte (P2) für den unteren Teilstrom (U) im wesentlichen eben ausgebildet und annähernd vertikal angeordnet ist und nach unten von der einen oberen Leitplatte (P) wegstrebt.

2. Nassschrotmühle nach Anspruch 1, **dadurch gekennzeichnet, dass** bei mehreren über den Umfang des Zutauftrichters (T) verteilten Wassereinläufen (W), vorzugsweise zwei annähernd koaxial gegenüberliegenden Wassereinläufen (W), jedem Wassereinlauf (W) eine Wasserverteilvorrichtung (A) mit zwei Düsen (D1,D2) zugeordnet ist.

3. Nassschrotmühle nach Anspruch 1, **dadurch gekennzeichnet, dass** die zwei Düsen (D1, D2) eine gemeinsame Mündung (M1) besitzen, und dass die Mündung (M1) entweder die Mündung (M) des Wassereinlaufs (W) ist oder stromauf der Mündung (M) in einem Wassereinlaufkanal (10) angeordnet ist.

4. Nassschrutmühle nach Anspruch 1, **dadurch gekennzeichnet, dass** die beiden Leitplatten (P1, P2) miteinander verbunden und an der Zulauftrichterwand (T) und/oder im Wassereinlaufkanal (10) angebracht sind.

5. Nassschrotmühle nach Anspruch 4, **dadurch gekennzeichnet, dass** die eine obere Leitplatte (P1) die Mündung (M) des Wassereinlaufs (W) in etwa hälftig teilt, und dass die andere untere Leitplatte (P2) mit einem in etwa der Hälfte der lichten Weite (L) der Mündung (M) entsprechenden Abstand vor der Mündung (M) unten von der einen oberen Leitplatte (P1) wegstrebt.

6. Nassschrotmühle nach Anspruch 5, **dadurch gekennzeichnet, dass** die eine obere Leitplatte (P1) durch die Mündung (M) des Wassereinlaufs (W) in den Wassereinlaufkanal (10) eingreift, vorzugsweise mit einem in etwa der lichten Weite (L) der Mündung (M) entsprechenden Maß, und in diesem Bereich (12) eine der lichten Weite (L) der Mündung (M) in etwa entsprechende Breite besitzt, dass ausgehend vom Bereich (12) die Breite der einen oberen Leitplatte (P1) nach innen in den Zufauftrichter (T) bis auf eine Breite (X) zunimmt, und dass am im Inneren des Zulauftrichters (T) liegenden freien Ende der einen oberen Leitplatte (P1) ein nach oben ansteigender Endabschnitt (14) geformt ist.

7. Nassschrotmühle nach Anspruch 3, **dadurch gekennzeichnet, dass** die Wasserverteilvorrichtung (A) an einem Ringflansch (17) angeordnet ist, der auf die Mündung (M) des Wassereinlaufs (W) aufgesetzt ist.

8. Nassschrotmühle nach Anspruch 1, **dadurch gekennzeichnet, dass** die Breite der anderen unteren Leitplatte (P2) größer ist als die lichte Weite (L) der Mündung, und die Erstreckung der unteren Leitplatte (P2) nach unten in etwa gleichbleibt oder allmählich zu- oder abnimmt und dass, vorzugsweise, die andere untere Leitplatte (P2) einen bogenförmigen, speziell in etwa halbkreisförmigen, Unterrand (16) hat.

9. Nassschrotmühle nach Anspruch 1, **dadurch gekennzeichnet, dass** eine entgegen der Strömungsrichtung weisende Kante (15) der einen oberen Leitplatte (P1) als Schneide ausgebildet ist und dass beide Leitplatten (P1, P2) scharfe Abrisskanten aufweisen.

10. Nassschrotmühle nach Anspruch 6, **dadurch gekennzeichnet, dass** die Wirkhöhe des aufgebogenen Endabschnitts (14) der einen oberen Leitplatte (P1) kleiner ist als die Hälfte der lichten Weite (L) der Mündung (M).

11. Nassschrotmühle nach wenigstens einem der vorhergehenden Ansprüche, **dadurch gekennzeichnet, dass** in der einen oberen Leitplatte (P1) der Übergang in den Endabschnitt (14) und/oder der Übergang (21) von der einen oberen Leitplatte (P1) in die andere untere Leitplatte (P2) gerundet ist (sind).

12. Nassschrotmühle nach wenigstens einem der vorhergehenden Ansprüche, **dadurch gekennzeichnet, dass** auf der Leitplatte (P1) und/oder (P2) hochstehende Strömungsleitstege (18, 19) angebracht sind.

13. Nassschrotmühle nach wenigstens einem der vorhergehenden Ansprüche, **dadurch gekennzeichnet, dass** in der Nähe des Verbindungsbereiches der beiden Leitplatten (P1, P2) wenigstens eine schlitzartige Spülöffnung (23) vorgesehen ist.

14. Nassschrotmühle nach wenigstens einem der vorhergehenden Ansprüche, **dadurch gekennzeichnet, dass** die Leitplatten (P1, P2) aus Metall, Blech oder Kunststoff bestehen und miteinander verschweißt, verlötet, verschraubt oder verklebt sind.

15. Nassschrotmühle nach Anspruch 1, **dadurch gekennzeichnet, dass** die Maischepumpe (P) eine Kreiselpumpe mit einem Kanallaufrad oder einem offenen Laufrad mit einem Pumpengehäuse ist, das nahe der unteren Mündung (5) des Zulauftrichters (T) angeordnet ist.

16. Nassschrotmühle nach wenigstens einem der vorhergehenden Ansprüche, **dadurch gekennzeichnet, dass** der Zulauftrichter (T) annähernd die Form eines umgekehrten vierseitigen Pyramidenstumpfes mit ebenen Seitenwänden (4) und gerundeten Übergängen (9) zwischen den Seitenwanden (4) aufweist, wobei die gerundeten Übergänge (9) sich in Richtung zur Maischepumpe (P) vergrößern und gemeinsam die im wesentlichen kreisrunde untere Mündung (5) des Zulauftrichters (T) definieren.

## Claims

1. A wet mill used especially for preparing mash and comprising a squeezing roll means (Q) in the upper area of a feed hopper (T) leading to a mash pump (P) located below said feed hopper, and further comprising at least one approximately horizontal mash liquor inlet (W) leading into said feed hopper, said water inlet (W) being arranged below the squeezing roll means and above the mash pump in spaced relationship therewith and having associated therewith a water distributing device (A) arranged at least predominantly in the interior of the feed hopper (T) and provided with nozzles (D1, D2) which are adapted to be used for forming at least one upper substream (O) and at least one lower substream (U), **characterized in that** the water distributing device (A) arranged at the opening (M) of the water inlet (W) on the feed hopper wall (4) consists of an upper nozzle (D1) for producing the upper substream (O) oriented substantially parallel to the squeezing roll means (Q) and of a lower nozzle (D2) for producing the lower substream (U) oriented substantially downwards along the feed hopper wall (4) and laterally away from the water inlet (W), and that the water distributing device (A) comprises two guide plates (P1, P2) for said substreams (O, U), an upper guide plate (P1) of which is used for the upper substream (O) and is implemented as a substantially flat component and arranged approximately horizontally, and the other, lower guide plate (P2) of which is used for the lower substream (U) and is implemented as a substantially flat component and arranged approximately vertically, said lower guide plate (P2) extending away from said upper guide plate (P1) in the lower region of said upper guide plate.

2. A wet mill according to claim 1, **characterized in that** in the case of a plurality of water inlets (W) distributed over the circumference of the feed hopper (T), preferably in the case of two approximately coaxially opposed water inlets (W), each water inlet (W) has associated therewith a water distributing device (A) with two nozzles (D1, D2).

3. A wet mill according to claim 1, **characterized in that** the two nozzles (D1, D2) have a common opening (M1), and that the opening (M1) is either the opening (M) of the water inlet (W) or is arranged upstream of said opening (M) in a water feed passage (10).

4. A wet mill according to claim 1, **characterized in that** the two guide plates (P1, P2) are interconnected and attached to the wall of the feed hopper (T) and/or arranged in the water feed passage (10).

5. A wet mill according to claim 4, **characterized in that** the first, upper guide plate (P1) divides the opening (M) of the water inlet (W) approximately into two halves, and that the second, lower guide plate (P2), which is arranged in front of the opening (M) at a distance corresponding to approximately half the inside width (L), extends away from said first, upper guide plate (P1) in the lower region of said first guide plate.

6. A wet mill according to claim 5, **characterized in that** the first, upper guide plate (P1) extends through the opening (M) of the water inlet (W) into the water feed passage (10), preferably with a length corresponding approximately to the inside width (L) of the opening (M), and has in this area (12) a width corresponding approximately to the inside width (L) of the opening (M), that, starting from this area (12), the width of the first, upper guide plate (P1) increases towards the interior of the feed hopper (T) until a width (X) is reached, and that an upwardly ascending end section (14) is formed on the free end of the first, upper guide plate (P1) located in the interior of the feed hopper (T) .

7. A wet mill according to claim 3, **characterized in that** the water distributing device (A) is arranged on an annular flange (17) attached to the opening (M) of the water inlet (W).

8. A wet mill according to claim 1, **characterized in that** the width of the second, lower guide plate (P2) is larger than the inside width (L) of the opening, and that the downward length of said lower guide plate (P2) remains approximately the same or increases or decreases gradually, and that, preferably, said second, lower guide plate (P2) has a curved, in particular a semicircular, lower edge (16).

9. A wet mill according to claim 1, **characterized in that** an edge (15) of the first, upper guide plate (P1) facing the direction of flow is implemented as a cutting edge, and that the tear-off edges of both guide plates (P1, P2) are sharp.

10. A wet mill according to claim 6, **characterized in that** the effective height of the upwardly bent end section (14) of the first, upper guide plate (P1) is smaller than half the inside width (L) of the opening (M).

11. A wet mill according to at least one of the preceding claims, **characterized in that,** in the first, upper guide plate (P1), the transition to the end section (14) and/or the transistion (21) from said first, upper guide plate (P1) to the second, lower guide plate (P2) is (are) implemented as rounded transitions.

12. A wet mill according to at least one of the preceding claims, **characterized in that** the guide plates (P1) and/or (P2) have provided thereon flow-guiding members (18, 19) which project from said guide plates.

13. A wet mill according to at least one of the preceding claims, **characterized in that** at least one slotlike rinsing opening (23) is provided in the vicinity of the connection area of the guide plates (P1, P2).

14. A wet mill according to at least one of the preceding claims, **characterized in that** the guide plates (P1, P2) consist of metal, sheet metal or plastic material and are connected by welding, soldering, by means of screws or by means of an adhesive.

15. A wet mill according to claim 1, **characterized in that** the mash pump (P) is a centrifugal pump which comprises a ducted impeller or an open impeller and the pump housing of which is arranged at a small distance from the lower opening (5) of the feed hopper (T).

16. A wet mill according to at least one of the preceding claims, **characterized in that** the feed hopper (T) has approximately the shape of an inverse, four-sided truncated pyramid with flat lateral surfaces (4) and rounded transitions (9) between said lateral surfaces (4), said rounded transitions (9) enlarging in the direction of the mash pump (P) and defining together the substantially circular lower opening (5) of the feed hopper (T).

## Revendications

1. Broyeur de grains par voie humide, en particulier pour la préparation de moût, comportant un broyeur à cylindres (Q) dans la partie supérieure d'une trémie d'alimentation (T) donnant vers une pompe de moût (P) située dessous, comportant au moins une arrivée d'eau pour moût (W) dans la trémie d'alimentation, sensiblement horizontale, disposée en-dessous du broyeur à cylindres et à distance au-dessus de la pompe de moût, un dispositif de répartition d'eau (A) étant associé à l'arrivée d'eau du moins principalement à l'intérieur de la trémie d'alimentation (T) et comportant des buses (D1, D2), par lesquelles au moins un flux partiel supérieur (O) et un flux partiel inférieur (U) peuvent être formés, **caractérisé en ce que** le dispositif de répartition d'eau (A) disposé à l'embouchure (M) de l'arrivée d'eau (W) sur la paroi de trémie d'alimentation (4) est constitué d'une buse supérieure (D1) pour créer le flux partiel supérieur (O) qui est orienté essentiellement parallèlement au broyeur à cylindres (Q) et d'une buse inférieure (D2) pour créer le flux partiel inférieur (U) qui est orienté essentiellement le long de la paroi de trémie d'alimentation (4) vers le bas en éloignement latéral de l'arrivée d'eau (W), et **en ce que** le dispositif de répartition d'eau (A) présente deux plaques guides (P1, P2) pour les flux partiels (O, U), parmi lesquelles une plaque guide supérieure (P1) pour le flux partiel supérieur (O) est réalisée essentiellement plane et est disposée approximativement horizontalement, et parmi lesquelles l'autre plaque guide inférieure (P2) pour le flux partiel inférieur (U) est réalisée essentiellement plane et est disposée approximativement verticalement et s'écarte de la plaque guide supérieure (P) vers le bas.

2. Broyeur de grains par voie humide selon la revendication 1, **caractérisé en ce que** dans le cas de plusieurs arrivées d'eau (W) réparties sur le pourtour de la trémie d'alimentation (T), de préférence deux arrivées d'eau (W) approximativement en regard l'une de l'autre coaxialement, un dispositif de répartition d'eau (A) comportant deux buses (D1, D2) est associé à chaque arrivée d'eau (W).

3. Broyeur de grains par voie humide selon la revendication 1, **caractérisé en ce que** les deux buses (D1, D2) possèdent une embouchure commune (M1), et **en ce que** l'embouchure (M1) soit est l'embouchure (M) de l'arrivée d'eau (W) soit est disposée dans un canal d'arrivée d'eau (10) en amont de l'embouchure (M).

4. Broyeur de grains par voie humide selon la revendication 1, **caractérisé en ce que** les deux plaques guides (P1, P2) sont reliées l'une à l'autre et sont montées sur la paroi de la trémie d'alimentation (T) et/ou dans le canal d'arrivée d'eau (10).

5. Broyeur de grains par voie humide selon la revendication 4, **caractérisé en ce que** la plaque guide supérieure (P1) divise l'embouchure (M) de l'arrivée d'eau (W) sensiblement en son milieu, et **en ce que** l'autre plaque guide inférieure (P2) par un écartement en amont de l'embouchure (M) correspondant sensiblement à la moitié de la largeur (L) de l'embouchure (M), s'écarte de la plaque guide supérieure (P1) vers le bas.

6. Broyeur de grains par voie humide selon la revendication 5, **caractérisé en ce que** par l'embouchure (M) de l'arrivée d'eau (W), la plaque guide supérieure (P1) vient en prise dans le canal d'arrivée d'eau (10), de préférence dans une mesure correspondant sensiblement à la largeur (L) de l'embouchure (M), et possède dans cette zone (12) une largeur correspondant sensiblement à la largeur (L) de l'embouchure (M), **en ce que** partant de la zone (12), la largeur de la plaque guide supérieure (P1) augmente vers l'intérieur dans la trémie d'alimentation (T) jusqu'à une largeur (X), et **en ce qu'**une section d'extrémité ascendante (14) est formée à l'extrémité libre de la plaque guide supérieure (P1) située à l'intérieur de la trémie d'alimentation (T).

7. Broyeur de grains par voie humide selon la revendication 3, **caractérisé en ce que** le dispositif de répartition d'eau (A) est disposé sur une bride annulaire (17) qui est apposée sur l'embouchure (M) de l'arrivée d'eau (W).

8. Broyeur de grains par voie humide selon la revendication 1, **caractérisé en ce que** la largeur de l'autre plaque guide inférieure (P2) est supérieure à la largeur (L) de l'embouchure, et l'extension de la plaque guide inférieure (P2) vers le bas demeure sensiblement égale ou augmente ou décroît progressivement, et **en ce que** de préférence l'autre plaque guide inférieure (P2) a un bord inférieur (16) en forme d'arc, en particulier sensiblement en forme de demi-cercle.

9. Broyeur de grains par voie humide selon la revendication 1, **caractérisé en ce qu'**une arête (15) de la plaque guide supérieure (P1) orientée à l'opposé de la direction d'écoulement est réalisée en forme de lame et **en ce que** les deux plaques guides (P1, P2) présentent des arêtes d'arrachement vives.

10. Broyeur de grains par voie humide selon la revendication 6, **caractérisé en ce que** la hauteur d'action de la section d'extrémité (14) coudée de la plaque guide supérieure (Pi) est inférieure à la moitié de la largeur (L) de l'embouchure (M).

11. Broyeur de grains par voie humide selon au moins l'une des revendications précédentes, **caractérisé en ce que** dans la plaque guide supérieure (P1) la transition à la section d'extrémité (14) et/ou la transition (21) de la plaque guide supérieure (P1) à la plaque guide inférieure (P2) est arrondie.

12. Broyeur de grains par voie humide selon au moins l'une des revendications précédentes, **caractérisé en ce que** des montants déflecteurs (18, 19) verticaux sont montés sur la plaque guide (P1) et/ou (P2).

13. Broyeur de grains par voie humide selon au moins l'une des revendications précédentes, **caractérisé en ce qu'**au moins une ouverture de rinçage (23) en forme de fente est prévue à proximité de la zone de liaison des deux plaques guides (P1, P2).

14. Broyeur de grains par voie humide selon au moins l'une des revendications précédentes, **caractérisé en ce que** les plaques guides (P1, P2) sont constituées de métal, de tôle ou de matière plastique et sont soudées, brasées, vissées ou collées l'une à l'autre.

15. Broyeur de grains par voie humide selon la revendication 1, **caractérisé en ce que** la pompe de moût (P) est une pompe centrifuge comportant un rotor de canal ou un rotor ouvert avec un corps de pompe, qui est disposé à proximité de l'embouchure inférieure (5) de la trémie d'alimentation (T).

16. Broyeur de grains par voie humide selon au moins l'une des revendications précédentes, **caractérisé en ce que** la trémie d'alimentation (T) présente approximativement la forme d'une pyramide quadrangulaire inversée avec des parois latérales planes (4) et des transitions arrondies (9) entre les parois latérales (4), les transitions arrondies (9) s'agrandissant dans la direction de la pompe de moût (P) et définissant ensemble l'embouchure inférieure (5) essentiellement circulaire de la trémie d'alimentation (T).
